# EUROPEAN PATENT APPLICATION

(11) **EP 4 371 890 A1**
(43) Date of publication of application: **22.05.2024**
(21) Application number: 21950217.6
(22) Date of filing: 16.07.2021
(51) Int. Cl.: B64G 1/10

(54) **OBSERVATION PLANNING DEVICE, OBSERVATION PLANNING METHOD, AND PROGRAM**

(71) Applicant: MITSUBISHI ELECTRIC CORPORATION, Chiyoda-ku Tokyo 100-8310 (JP)
(72) Inventor: HONDA Akihiko, Tokyo 100-8310 (JP); NISHIYAMA Takehiro, Tokyo 100-8310 (JP)
(74) Representative: Meissner Bolte Partnerschaft mbB
(86) International application number: PCT/JP2021/026869
(87) International publication number: WO 2023/286281

(57) **Abstract**

An observation planning device (1) includes an observation request acquirer (11) to acquire observation request information for requesting observation of an observation area, an observational opportunity specifier (12) to specify, based on the observation request information and vehicle information about a vehicle, orbit paths of the vehicle enabling observation of the observation area, and to specify observational opportunities of observing the observation area for each of the specified orbit paths, an observation plan determiner (14) to generate, based on the vehicle information and an observation scene list indicating observation scenes being observations performed in all the observational opportunities specified by the observational opportunity specifier (12), temporary observation plans by combining observation scenes of the observation scenes, and to determine a temporary observation plan of the temporary observation plans having a higher evaluation value for efficiency evaluation as an observation plan, and an observation-plan outputter (15) to output the observation plan determined by the observation plan determiner (14).

## Description

### Technical Field

The present disclosure relates to an observation planning device, an observation planning method, and a program.

### Background Art

To observe the surface of the earth with a sensor mounted on one or more aerospace vehicles (hereafter referred to as vehicles) such as artificial satellites or aircraft, the date and time when the vehicles pass near an observation target are specified to determine an observation plan including parameters associated with the use of the sensor. Main parameters associated with the use of the sensor include an observation date and time, and an angle (hereafter referred to as an off-nadir angle) at which the sensor is oriented. When multiple vehicles are available, a vehicle for use is to be determined. When observation is not complete in a single step, the order of observation is to be determined. To create an observation plan, the possibility of observation is calculated based on the agility performance of each vehicle or the positional relationship between the vehicle and the observation target, and feasible observational opportunities are listed. The observations performed in an observational opportunity are hereafter referred to as an observation scene. The observation scene includes various parameters associated with an observation performed in an observational opportunity. Thereafter, an observation plan to be actually performed is determined based on a list of feasible observation scenes as well as exclusionary conditions.

Patent Literature 1 describes a satellite observation scheduling system that calculates combinations of each observation point and the corresponding observational opportunity with satellites including an earth-surface observation sensor, and minimizes an evaluation function for each combination to perform optimal observation.

### Citation List

### Patent Literature

Patent Literature 1: Unexamined Japanese Patent Application Publication No. 2019-202587

### Summary of Invention

### Technical Problem

With the technique described in Patent Literature 1, when an observation area, serving as the area of an observation target, has a greater size than the observation range or the area that can be captured by a sensor mounted on a vehicle in a single observational opportunity, the positional relationship between the vehicle and the observation target can be unknown. This technique may not uniquely determine the parameter value in each observation scene, and involves selection of multiple appropriate parameter values in the planning process. In addition, an observation plan for observation scenes acquired by finely dividing successive parameter values is to be created for an optimal plan. In this case, an enormous number of feasible observation scenes are listed, from which determining a combination of optimal observation scenes and planning an efficient observation plan is difficult.

In response to the above issue, an objective of the present disclosure is to facilitate creation of an efficient observation plan including an observation area with a greater size than an observation range.

### Solution to Problem

To achieve the above objective, an observation planning device according to an aspect of the present disclosure includes an observation request acquirer, an observational opportunity specifier, an observation plan determiner, and an observation-plan outputter. The observation request acquirer acquires observation request information for requesting observation of an observation area. The observational opportunity specifier specifies, based on the observation request information and vehicle information about a vehicle, a plurality of orbit paths of the vehicle enabling observation of the observation area, and specifies observational opportunities of observing the observation area for each of the specified plurality of orbit paths. The observation plan determiner generates, based on the vehicle information and an observation scene list indicating a plurality of observation scenes that are observations performed in all the observational opportunities specified by the observational opportunity specifier, temporary observation plans by combining observation scenes of the plurality of observation scenes, and determines, as an observation plan, a temporary observation plan of the temporary observation plans having a higher evaluation value for efficiency evaluation. The observation-plan outputter outputs the observation plan determined by the observation plan determiner.

### Advantageous Effects of Invention

The structure according to the above aspect of the present disclosure can facilitate creation of an efficient observation plan including an observation area with a greater size than an observation range by generating a temporary observation plan based on the observation scene list and the vehicle information and determining a temporary observation plan with a high evaluation value for efficiency evaluation as an observation plan.

### Brief Description of Drawings

FIG. 1 is a schematic diagram of an observation area in Embodiment 1;
FIG. 2 is a functional block diagram of an observation planning device according to Embodiment 1;
FIG. 3 is a schematic diagram of a representative point group substituting for the observation area in Embodiment 1;
FIG. 4 is a schematic diagram of a specified observation scene in Embodiment 1;
FIG. 5 is a schematic diagram of an extracted observation scene in Embodiment 1;
FIG. 6 is a flowchart of an observation planning process in Embodiment 1;
FIG. 7 is a flowchart of an observation scene extracting process in Embodiment 1;
FIG. 8 is a flowchart of an observation plan determining process in Embodiment 1;
FIG. 9 is a functional block diagram of an observation planning device according to Embodiment 2;
FIG. 10 is a flowchart of an observation planning process in Embodiment 2; and
FIG. 11 is a diagram of the observation planning device according to Embodiments 1 and 2, illustrating the hardware configuration.

### Description of Embodiments

An observation planning device, an observation planning method, and a program according to one or more embodiments are described below in detail with reference to the drawings. In the drawings, the same reference signs denote the same or equivalent components. In one or more embodiments, a sensor mounted on one or more vehicles creates an observation plan for observing the surface of the earth. In addition to the surface of the planet Earth, the surface of the earth in one or more embodiments includes the surface of any astral body serving as a potential observation target.

### Embodiment 1

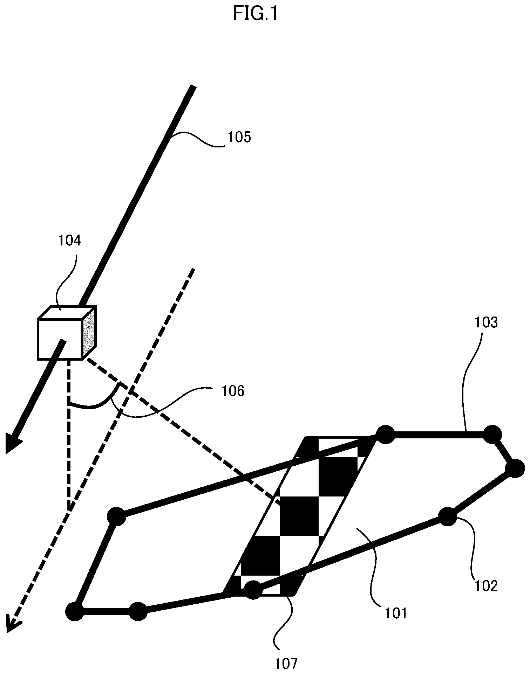

As illustrated in FIG. 1, an observation area 101 in Embodiment 1 is defined by a polygon 103 having multiple vertices 102. A vehicle 104 navigates an orbit path 105. A sensor mounted on the vehicle 104 is oriented at an off-nadir angle 106. An observation range 107 of the sensor mounted on the vehicle 104 is smaller than the observation area 101. Thus, the vehicle 104 involves multiple observational opportunities.

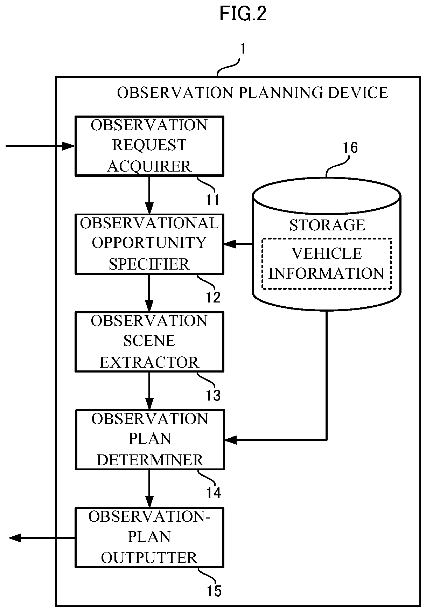

With reference to FIG. 2, the functional components of an observation planning device 1 that creates an observation plan for observing an observation area are described. The observation planning device 1 includes an observation request acquirer 11 that acquires observation request information for requesting observation of the observation area, an observational opportunity specifier 12 that specifies an observational opportunity for observing the observation area, and an observation scene extractor 13 that extracts a highly significant observation scene. The observation planning device 1 also includes an observation plan determiner 14 that repeats generation of a temporary observation plan based on an extracted observation scene list and evaluation of the temporary observation plan to determine an observation plan, an observation-plan outputter 15 that outputs observation plan information, and a storage 16 that stores vehicle information about the vehicle.

The vehicle information stored in the storage 16 is described. The vehicle information includes vehicle classification information indicating the vehicle classification of each vehicle, observation-sensor classification information indicating the classification of the observation sensor mounted on each vehicle, (orbital) ephemeris information indicating the (orbital) ephemeris of each vehicle, and agility performance information indicating the agility performance of each vehicle. The vehicle classification includes, for example, an artificial satellite and an aircraft. The observation sensor classification includes, for example, an optical sensor, a synthetic aperture radar, and a line sensor. The (orbital) ephemeris includes, for example, the orbit of each vehicle, and a date and time when each vehicle passes the points.

The vehicle information also includes observation-mode classification information indicating observation mode classification of each observation sensor. The observation mode classification includes, for example, a scanning-direction specification mode in which the scanning direction can be specified, and an off-nadir-angle fixed mode. When the observation mode classification indicated by the observation-sensor classification information is the off-nadir-angle fixed mode, the observation-sensor classification information is associated with observation width information indicating the observation width, off-nadir angle information indicating the off-nadir angle, and resolution information indicating the resolution. When the observation mode classification indicated by the observation-sensor classification information is the scanning-direction specification mode, the observation-sensor classification information is associated with observation width information indicating the observation width, off-nadir-angle range information indicating the range of the off-nadir angle, maximum continuous observation time information indicating the maximum continuous observation time in a single observational opportunity, and resolution information indicating the resolution. In the scanning-direction specification mode, the observation width may be changed by the off-nadir angle depending on the observation sensor classification.

The agility performance of the vehicle is used to determine whether intended attitude control ends within a period from the end of observation of one observation scene in a combination of two observation scenes to the start of observation of the other observation scene, or in other words, used as a constraint of a time interval between the observation scenes. The agility performance is, for example, expressed with an angle and the time used to complete the attitude control at the angle.

The observation request acquirer 11 acquires observation request information for requesting observation of the observation area. The observation request information may be directly input into the observation request acquirer 11 by a user, or acquired from an external device or an external system. The observation request information includes observation area information indicating one or more observation areas. The observation area information indicates the location defining the observation area, and is expressed by, for example, the coordinates of the vertices 102 of the polygon 103 illustrated in FIG. 1.

The observation request information includes designated vehicle classification information indicating designated vehicle classification, designated observation-sensor classification information indicating designated observation sensor classification, designated observation-mode classification information indicating designated observation mode classification, designated observation period information indicating a designated observation period, designated off-nadir-angle range information indicating a designated range of the designated off-nadir angle, priority index information indicating a priority index used to generate a temporary observation plan, and non-observation-area ratio threshold information indicating a threshold of a rate of the unobserved area used to evaluate a temporary observation plan. The observation request information may further include significant observation point information indicating the location of a specific significant observation point included in the observation area, or unobserved area reduction threshold information indicating a threshold of the amount of reduction of the unobserved area used to generate a temporary observation plan.

The priority index is the priority of the observation scene used in a temporary observation plan, and may include multiple indexes such as a priority of each point and a priority designated by the user. The unobserved area ratio is the ratio of, to the entire observation area, an unobserved area, that is, an observation area uncovered with the observation range in all the observation scenes in a temporary observation plan. The amount of reduction of the unobserved area indicates the amount of an unobserved area or the observation area yet to be observed and reduced with the observation scenes. The observation request acquirer 11 transmits the acquired observation request information to the observational opportunity specifier 12.

The observational opportunity specifier 12 specifies multiple orbit paths that enable observation of the observation area under designated conditions based on observation area information, the designated vehicle classification information, the designated observation-sensor classification information, the designated observation-mode classification information, the designated observation period information, and the designated off-nadir-angle range information included in the observation request information received from the observation request acquirer 11, as well as on the vehicle classification information, the (orbital) ephemeris information, the observation-mode classification information, the off-nadir angle information, and the off-nadir-angle range information included in the vehicle information stored in the storage 16. When multiple vehicles are available or the same vehicle navigates an orbit path again during the observation period, multiple orbit paths form.

The observational opportunity specifier 12 specifies an observational opportunity for enabling observation of the observation area for each specified orbit path based on the (orbital) ephemeris information, the observation-mode classification information, the observation width information, the resolution information, the off-nadir angle information, the off-nadir-angle range information, and the maximum continuous observation time information included in the vehicle information stored in the storage 16.

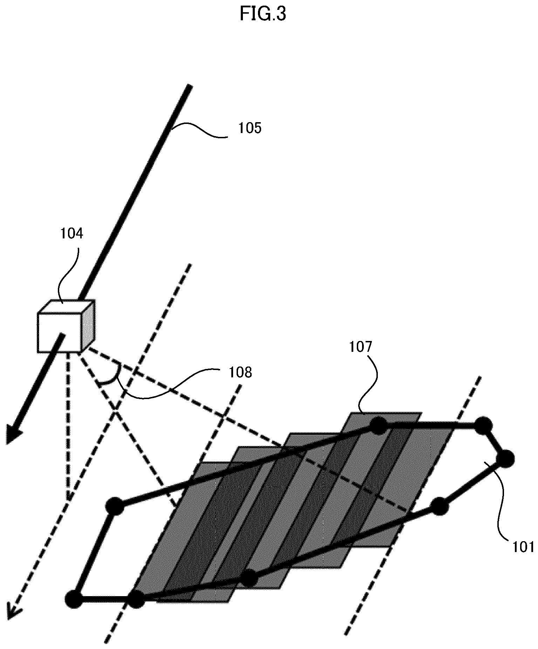

The observational opportunity to be specified by the observational opportunity specifier 12 is described with reference to FIG. 3. In the example in FIG. 3, the observation mode of the observation sensor in the vehicle 104 is the scanning-direction specification mode. The observational opportunity specifier 12 specifies an observational opportunity for scanning an off-nadir angle range 108 for the maximum continuous observation time on the orbit path 105.

The observational opportunity specifier 12 transmits, to the observation scene extractor 13, the observation request information and the observation scene list indicating the observation scenes of all the specified observational opportunities. The observation scenes in the scanning-direction specification mode include, for example, parameters such as an orbit path, an observation mode, an observation date and time, an off-nadir angle range, an observation width, a scanning direction, and maximum continuous observation time. The observation scenes in the off-nadir-angle fixed mode include, for example, parameters such as an orbit path, an observation mode, an observation date and time, an off-nadir angle, and an observation width.

The observation scene extractor 13 calculates the degree of significance of each observation scene based on the observation scene list and the observation request information received from the observational opportunity specifier 12. The observation scene extractor 13 extracts the highly significant observation scene from the observation scene list.

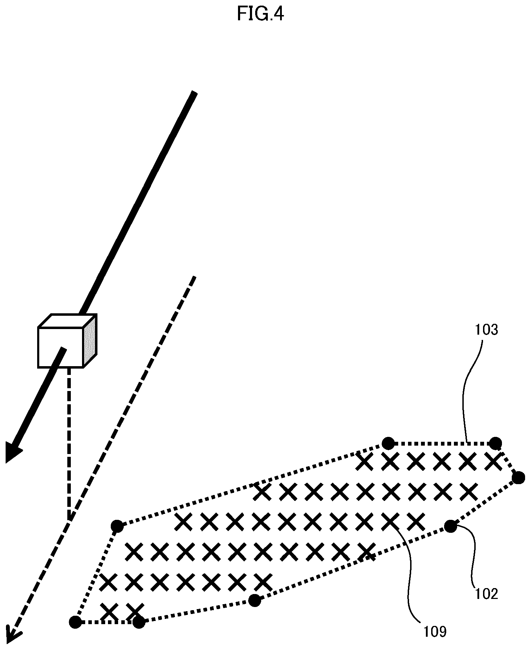

More specifically, the observation scene extractor 13 converts, based on the observation area information included in the observation request information, the observation area defined by the positional information of the vertices 102 of the polygon 103 illustrated in FIG. 1 to a representative point group 109 enclosed in the polygon 103 illustrated in FIG. 4. The method for converting the area to the representative point group 109 includes, for example, dividing a latitude-longitude range in the observation area into divisions, and placing the representative point group on the grid based on the combination of the divisions. When the observation request information includes significant observation point information, the observation scene extractor 13 adds the representative point group at the same position as the significant point to the representative point group 109 based on the significant observation point information. The observation scene extractor 13 generates the representative point group information indicating the representative point group 109.

Referring back to FIG. 2, the observation scene extractor 13 sorts the observation scene list based on the parameter that varies among the observation scenes, and sorts the observation scene list based on an observation date and time. The parameter that varies among the observation scenes is, for example, the area size of the observation range for each observation scene. The observation scene extractor 13 extracts, based on the sorted observation scene list and the representative point group information, representative points covered by the observation range for each observation scene, and associates the covered representative point information indicating the extracted representative points with the observation scene. The representative points covered by the observation range for each observation scene are hereafter referred to as covered representative points.

The observation scene extractor 13 calculates, based on the covered representative point information, the number of times each representative point is covered by the observation range for each observation scene, and calculates the total number of times each representative point is covered in all the observation scenes. The observation scene extractor 13 associates the total coverage number information indicating the resulting total number of times of covering with the covered representative point information. The observation scene extractor 13 calculates the date and time when each representative point is covered by the observation range for each observation scene. The observation scene extractor 13 associates coverage date-time information indicating the resulting date and time with the covered representative point information. In some embodiments, the observation scene extractor 13 may calculate the order in which each representative point is covered by the observation range for each observation scene. In this case, the observation scene extractor 13 associates coverage order information indicating the resulting order with the covered representative point information.

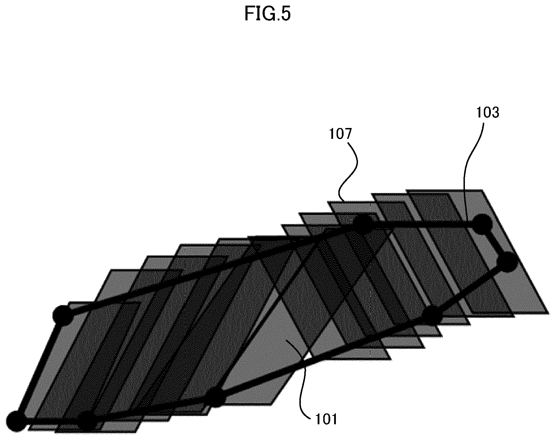

The observation scene extractor 13 calculates the degree of significance associated with the coverage capability of each covered representative point based on the total coverage number information associated with the covered representative point information. The degree of significance associated with the coverage capability is described with reference to FIG. 5. FIG. 5 illustrates an example of the observation range 107 in all the observation scenes in the observation scene list. As illustrated in FIG. 5, the observation range 107 of all the observation scenes in the observation scene list covers the observation area 101 defined by the polygon 103. In each observation scene, the observation scene extractor 13 assigns a higher degree of significance to a covered representative point that are covered fewer times in total as the point that is less observable.

The observation scene extractor 13 calculates the degree of significance associated with the coverage date and time for each covered representative point based on the coverage date-time information associated with the covered representative point information. In each observation scene, the observation scene extractor 13 assigns a higher degree of significance to a representative point that are covered by the observation range 107 fewer times before the observation date and time, as the point that is more likely to be observed later.

When the coverage order information is associated with covered representative point information rather than the coverage date-time information, the observation scene extractor 13 calculates the degree of significance associated with the coverage order of the covered representative points based on the coverage order information associated with the covered representative point information. The observation scene extractor 13 assigns a higher degree of significance to, in each observation scene, a representative point that is assigned with a later position in the coverage order, as the point that is more likely to be observed later.

The observation scene extractor 13 determines the highest of the degrees of significance of the covered representative points in each observation scene as a specific degree of significance of the observation scene. The observation scene extractor 13 sorts the observation scene list based on the specific degree of significance of the observation scene. With the three sorts performed, the observation scene list is sorted in descending order of the specific degree of significance, in ascending order of the observation date and time, and in descending order of the parameter (for example, the area size of the observation range for each observation scene) that varies among the observation scenes. The observation scene extractor 13 extracts N (extraction threshold) observation scenes from the top in the sorted observation scene list based on a predetermined extraction threshold. The extraction threshold may be included in the observation request information. The observation scene extractor 13 transmits the observation request information and the extracted observation scene list indicating the extracted observation scenes to the observation plan determiner 14.

The observation plan determiner 14 generates a temporary observation plan based on the extracted observation scene list received from the observation scene extractor 13 and the agility performance information included in the vehicle information stored in the storage 16.

More specifically, the observation plan determiner 14 models, based on the extracted observation scene list, an observation planning problem (a set cover problem) for combining observation scenes as a 0-1 integer programming problem. The observation plan determiner 14 releases the 0-1 integer programming problem from the integer constraint, and converts the 0-1 integer programming problem to a linear programming problem. The observation plan determiner 14 solves the linear programming problem with a solver to generate an initial solution to a temporary observation plan including a combination of multiple observation scenes in the extracted observation scene list. The objective function of the observation planning problem is the total observation time. For example, an observation relative second is used as the cost of the observation planning problem. The constraint of the observation planning problem is that the sum of design variables indicating the use of observation having an exclusion relationship is less than or equal to 1. Of the design variables in the initial solution, a design variable less than the threshold is converted to 0, and a design variable greater than or equal to the threshold is converted to 1. The initial solution is modeled again as a 0-1 integer programming problem, and the problem is solved with a nonlinear programming problem solver to determine an observation plan.

The observation plan determiner 14 calculates the time interval between the observation scenes included in the temporary observation plan. When the resulting time interval between the observation scenes does not satisfy the constraint indicated by the agility performance information included in the vehicle information, the observation plan determiner 14 discards the temporary observation plan, and generates a new temporary observation plan.

When the time interval between the observation scenes in the temporary observation plan satisfies the constraint, the observation plan determiner 14 calculates an evaluation value for evaluating the efficiency of the temporary observation plan. The evaluation value is calculated based on the unobserved area ratio in the temporary observation plan, the number of times of observation, and the period of time taken for observation. The number of times of observation is the total number of observation scenes included in the temporary observation plan. The period of time taken for observation is the time from the start of the observation scenes included in the temporary observation plan to the end of all the observation scenes.

The evaluation value is calculated through conversion to one scalar value using, for example, the Chebyshev function, based on an intended value and an aspiration level set by the user. For example, a value serving as a weight is calculated with the intended value of the unobserved area ratio being 0% and the aspiration level being 5%. The aspiration level of the unobserved area ratio is a threshold of an unobserved area ratio indicated by the non-observation-area ratio threshold information included in the observation request information.

The observation plan determiner 14 generates a new temporary observation plan from an existing temporary observation plan through simulated annealing, that is, a nonlinear programming problem solver. When a new observation scene is added to an existing temporary observation plan, the observation plan determiner 14 sequentially uses observation scenes with higher priorities based on the priority index indicated by the priority index information included in the observation request information. When the observation request information includes unobserved area reduction threshold information, the observation plan determiner 14, intending to add a new observation scene to an existing temporary observation plan, uses an observation scene in which the amount of reduction of the unobserved area exceeds the threshold indicated by the unobserved area reduction threshold information.

The observation plan determiner 14 repeats generation of the temporary observation plan and calculation of the evaluation value, and updates the temporary observation plan to the temporary observation plan satisfying the constraint and having a higher evaluation value. After the observation plan determination process ends, the observation plan determiner 14 determines the temporary observation plan as an observation plan. The observation plan determiner 14 determines that the observation plan determination process ends when, for example, the maximum calculation time, a maximum number of loops, or the evaluation value exceeds a predetermined threshold. The threshold of the maximum calculation time, the maximum number of loops, or the evaluation value may be included in the observation request information. The observation plan determiner 14 transmits the observation plan information indicating the determined observation plan to the observation-plan outputter 15.

The observation-plan outputter 15 outputs the observation plan information received from the observation plan determiner 14. The observation plan information may be output through, for example, a screen or a printout, or transmitted to a user terminal. In some embodiments, the observation plan information may be output to a control device in the vehicle to operate the vehicle based on the observation plan information.

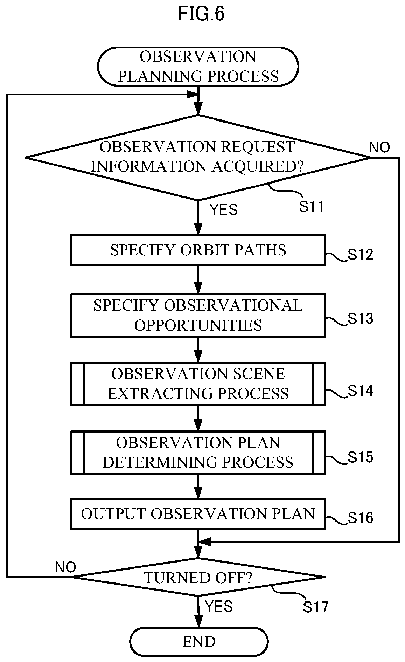

The observation planning process performed by the observation planning device 1 is described with reference to FIG. 6. The observation planning process illustrated in FIG. 6 starts when the observation planning device 1 is turned on. The observation request acquirer 11 determines whether the observation request information is acquired (step S11). When the observation request acquirer 11 does not acquire the observation request information (NO in step S11), the processing advances to step S17. Upon acquiring the observation request information (YES in step S 1 1), the observation request acquirer 11 transmits the observation request information to the observational opportunity specifier 12.

The observational opportunity specifier 12 specifies multiple orbit paths that enable observation of the observation area under designated conditions based on the observation area information, the designated vehicle classification information, the designated observation-sensor classification information, the designated observation-mode classification information, the designated observation period information, and the designated off-nadir-angle range information included in the observation request information received from the observation request acquirer 11, as well as on the vehicle classification information, the (orbital) ephemeris information, the observation-mode classification information, the off-nadir angle information, and the off-nadir-angle range information included in the vehicle information stored in the storage 16 (step S12).

The observational opportunity specifier 12 specifies, for each specified orbit path, observational opportunities for observation of the observation area based on the (orbital) ephemeris information, the observation-mode classification information, the observation width information, the off-nadir angle information, the off-nadir-angle range information, and the maximum continuous observation time information included in the vehicle information stored in the storage 16 (step S13). The observational opportunity specifier 12 transmits the observation request information and the observation scene list indicating the observation scene of all the specified observational opportunities to the observation scene extractor 13.

The observation scene extractor 13 performs an observation scene extracting process to extract a highly significant observation scene from the observation scene list based on the observation scene list and the observation request information received from the observational opportunity specifier 12 (step S14). The observation scene extractor 13 transmits the observation request information and the extracted observation scene list indicating the extracted observation scene to the observation plan determiner 14.

The observation plan determiner 14 performs an observation plan determining process to determine an observation plan with a high evaluation value based on the extracted observation scene list and the observation request information received from the observation scene extractor 13 and the agility performance information included in the vehicle information stored in the storage 16 (step S15). The observation plan determiner 14 transmits the observation plan information indicating the determined observation plan to the observation-plan outputter 15.

The observation-plan outputter 15 outputs the observation plan information received from the observation plan determiner 14 (step S16). When the observation planning device 1 is not turned off (NO in step S17), the processing returns to step S 11, and repeats steps S11 to S17. When the observation planning device 1 is turned off (YES in step S17), the processing ends.

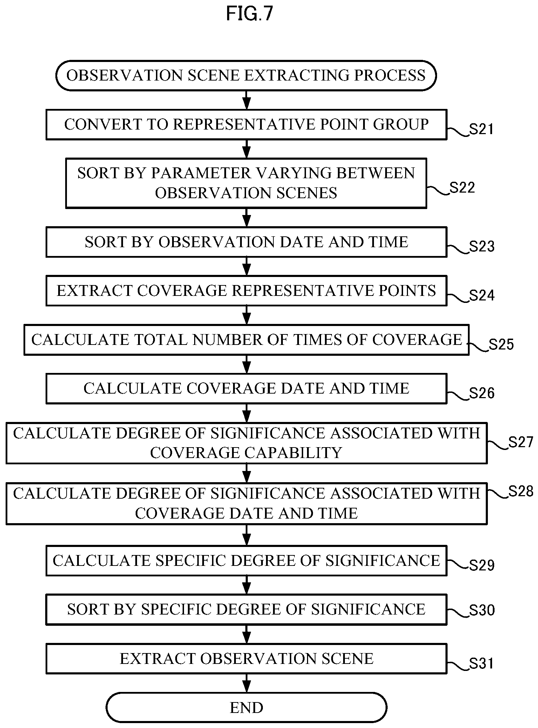

The observation scene extracting process performed by the observation scene extractor 13 in step S14 is now described with reference to FIG. 7. The observation scene extractor 13 converts the observation area to the representative point group based on the observation area information included in the observation request information received from the observational opportunity specifier 12 (step S21).

For example, the observation scene extractor 13 converts the observation area defined by the positional information of the vertices 102 of the polygon 103 illustrated in FIG. 1 to the representative point group 109 enclosed in the polygon 103 illustrated in FIG. 4. The method for converting the area to the representative point group 109 includes, for example, dividing a latitude-longitude range in the observation area into divisions, and placing the representative point group on the grid based on the combination of the divisions. When the observation request information includes significant observation point information, the observation scene extractor 13 adds the representative point group at the same position as the significant point to the representative point group 109 based on the significant observation point information. The observation scene extractor 13 generates the representative point group information indicating the representative point group 109.

Referring back to FIG. 7, the observation scene extractor 13 sorts the observation scene list received from the observational opportunity specifier 12 by the parameter that varies among the observation scenes (step S22), and then sorts the observation scene list by the observation date and time (step S23). The parameter that varies among the observation scenes is, for example, the area size of the observation range for each observation scene.

The observation scene extractor 13 extracts, based on the sorted observation scene list and the representative point group information, covered representative points for each observation scene (step S24), and associates the covered representative point information indicating the covered representative points with the observation scene. The observation scene extractor 13 calculates, based on the covered representative point information, the number of times each representative point is covered by the observation range for each observation scene, and calculates the total number of times each representative point is covered in all the observation scenes (step S25). The observation scene extractor 13 associates the total coverage number information indicating the resulting total number of times of covering with the covered representative point information.

The observation scene extractor 13 also calculates the date and time when each representative point is covered by the observation range for each observation scene (step S26). The observation scene extractor 13 associates the coverage date-time information indicating the resulting date and time with the covered representative point information. In step S26, the observation scene extractor 13 may calculate the order in which each representative point is covered by the observation range for each observation scene. In this case, the observation scene extractor 13 associates the coverage order information indicating the resulting order with the covered representative point information. The observation scene extractor 13 calculates the degree of significance associated with the coverage capability of each covered representative point based on the total coverage number information associated with the covered representative point information (step S27).

FIG. 5 illustrates an example of the observation range 107 in all the observation scenes in the observation scene list. As illustrated in FIG. 5, the observation range 107 in all the observation scenes in the observation scene list covers the observation area 101 defined by the polygon 103. In each observation scene, the observation scene extractor 13 assigns a higher degree of significance to a covered representative point that are covered fewer times in total as the point that is less observable.

Referring back to FIG. 7, the observation scene extractor 13 calculates a degree of significance associated with the coverage date and time for each covered representative point based on the coverage date-time information associated with the covered representative point information (step S28). In each observation scene, the observation scene extractor 13 assigns a higher degree of significance to a representative point that are covered by the observation range 107 fewer times before the observation date and time, as the point that is more likely to be observed later.

In step S26, when the observation scene extractor 13 calculates the order of each representative point covered by the observation range for each observation scene, the observation scene extractor 13 calculates the degree of significance associated with the coverage order of the covered representative point based on the coverage order information associated with the covered representative point information. The observation scene extractor 13 assigns a higher degree of significance to, in each observation scene, a representative point that is assigned with a later position in the coverage order, as the point that is more likely to be observed later.

The observation scene extractor 13 calculates the highest of the degrees of significance of the covered representative points for each observation scene as a specific degree of significance of the observation scene (step S29). The observation scene extractor 13 sorts the observation scene list by the specific degree of significance of the observation scene (step S30). With the three sorts in steps S22, S23, and S30, the observation scene list is sorted in descending order of the specific degree of significance, in ascending order of the observation date and time, and in descending order of the parameter (for example, the area size of the observation range for each observation scene) that varies among the observation scenes.

The observation scene extractor 13 extracts N (extraction threshold) observation scenes from the top in the sorted observation scene list based on the predetermined extraction threshold (step S31). The observation scene extractor 13 transmits the observation request information and the extracted observation scene list indicating the extracted observation scenes to the observation plan determiner 14, and ends the observation scene extracting process.

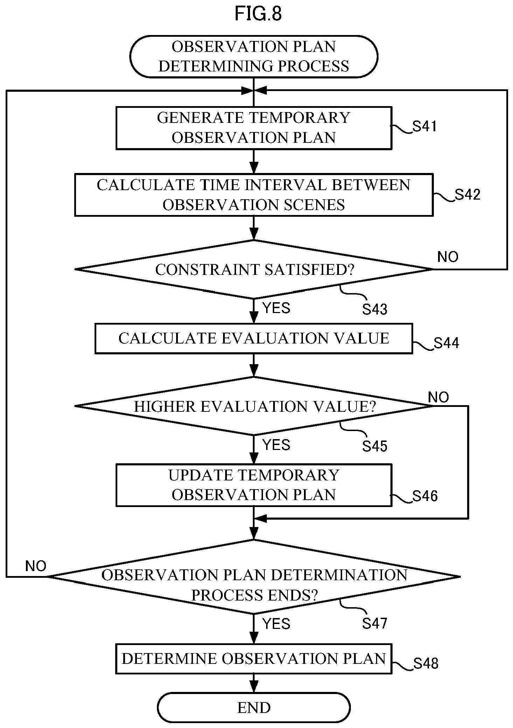

The observation plan determining process performed by the observation plan determiner 14 in step S15 is now described with reference to FIG. 8. The observation plan determiner 14 generates a temporary observation plan based on the extracted observation scene list received from the observation scene extractor 13 and the agility performance information included in the vehicle information stored in the storage 16 (step S41). For example, the observation plan determiner 14 models the observation planning problem (a set cover problem) into a 0-1 integer programming problem based on the extracted observation scene list. The observation plan determiner 14 releases the 0-1 integer programming problem from the integer constraint, and converts the 0-1 integer programming problem to a linear programming problem. The observation plan determiner 14 solves the linear programming problem with a solver to generate an initial solution to the temporary observation plan including a combination of multiple observation scenes in the extracted observation scene list.

The observation plan determiner 14 calculates the time interval between the observation scenes included in the temporary observation plan (step S42). The observation plan determiner 14 determines whether the resulting time interval between the observation scenes satisfies the constraint indicated by the agility performance information included in the vehicle information (step S43). When the time interval does not satisfy the constraint indicated by the agility performance information (NO in step S43), the observation plan determiner 14 discards the temporary observation plan, and returns to step S41 to generate a new temporary observation plan. The observation plan determiner 14 generates a new temporary observation plan from an existing temporary observation plan through simulated annealing. To add a new observation scene to an existing temporary observation plan, the observation plan determiner 14 sequentially uses observation scenes with higher priorities based on the priority index indicated by the priority index information included in the observation request information. When the observation request information includes unobserved area reduction threshold information, the observation plan determiner 14, intending to add a new observation scene to an existing temporary observation plan, uses an observation scene in which the amount of reduction of the unobserved area exceeds the threshold indicated by the unobserved area reduction threshold information.

When the time interval satisfies the constraint indicated by the agility performance information (YES in step S43), the observation plan determiner 14 calculates the evaluation value for evaluating the efficiency of the temporary observation plan (step S44). The evaluation value is calculated based on the unobserved area ratio of the temporary observation plan, the number of times of observation, and the period of time taken for observation. The number of times of observation is the total number of observation scenes included in the temporary observation plan. The period of time taken for observation is the time taken from the start of the observation scenes included in the temporary observation plan to the end of all the observation scenes. The evaluation value is calculated through conversion to one scalar value using, for example, the Chebyshev function, based on an intended value and an aspiration level set by the user. For example, a value serving as a weight is calculated with the intended value of the unobserved area ratio being 0% and the aspiration level being 5%. The aspiration level of the unobserved area ratio is a threshold of the unobserved area ratio indicated by the non-observation-area ratio threshold information included in the observation request information.

The observation plan determiner 14 determines whether the evaluation value is higher than in the previously generated temporary observation plan (step S45). When the evaluation value is not higher (NO in step S45), the processing advances to step S47. When the evaluation value is higher (YES in step S45), the temporary observation plan is updated (step S46). The observation plan determiner 14 determines whether the observation plan determination process ends (step S47). The observation plan determiner 14 determines that the observation plan determination process ends when, for example, the maximum calculation time, the maximum number of loops, or the evaluation value exceeds the predetermined threshold.

When the observation plan determination process does not end (NO in step S47), the processing returns to step S41 and repeats steps S41 to S47. When the observation plan determination process ends (YES in step S47), the observation plan determiner 14 determines the temporary observation plan as the observation plan (step S48). The observation plan determiner 14 transmits the observation plan information indicating the determined observation plan to the observation-plan outputter 15 and ends the determination of the observation plan.

The observation planning device 1 according to Embodiment 1 generates a temporary observation plan based on the observation scene list and the vehicle information, including the observation area with a greater size than the observation range, and determines a temporary observation plan with a high evaluation value for evaluating the efficiency as an observation plan to facilitate creation of an efficient observation plan. The observation planning device 1 can also create an observation plan in which the observation scene in a previous cycle and the observation scene in the current cycle do not interfere with each other, when formulating an observation plan in which the observation period is divided and observation is cyclically performed multiple times. Under any short cyclic condition or few available vehicles, the observation planning device 1 can easily create an efficient observation plan.

### Embodiment 2

In Embodiment 1, a temporary observation plan is generated based on the extracted observation scene list indicating the observation scenes extracted by the observation scene extractor 13 and the agility performance information included in the vehicle information stored in the storage 16. In Embodiment 2, a temporary observation plan is generated based on the observation scene list indicating the observation scenes of all the observational opportunities specified by the observational opportunity specifier 12 and the agility performance information included in the vehicle information stored in the storage 16. Embodiment 2 is described focusing on the differences from Embodiment 1.

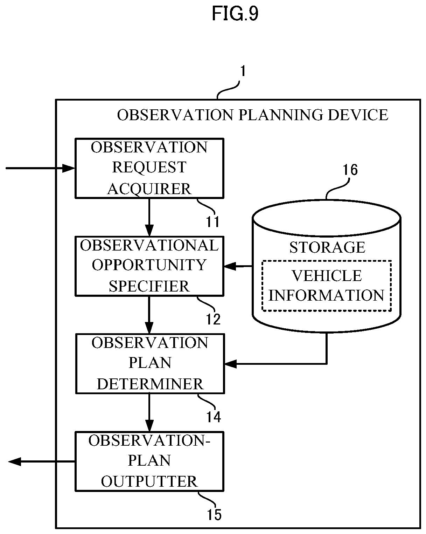

As illustrated in FIG. 9, an observation planning device 1 according to Embodiment 2 includes the same functional components as the observation planning device 1 according to Embodiment 1 except the observation scene extractor 13. The observational opportunity specifier 12 transmits the observation request information and the observation scene list indicating the observation scenes of all the specified observational opportunities to the observation plan determiner 14. The observation plan determiner 14 generates a temporary observation plan based on the observation scene list received from the observational opportunity specifier 12 and the agility performance information included in the vehicle information stored in the storage 16. The other functional components are the same as the components in the observation planning device 1 according to Embodiment 1.

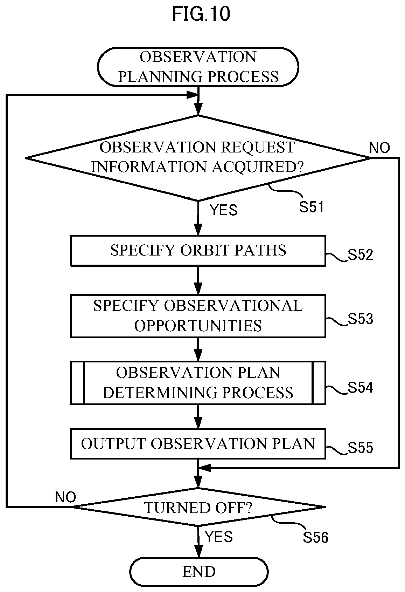

The observation planning process performed by the observation planning device 1 is described with reference to FIG. 10. The observation planning process illustrated in FIG. 10 starts when the observation planning device 1 is turned on. The observation request acquirer 11 determines whether the observation request information is acquired (step S51). When the observation request acquirer 11 does not acquire the observation request information (NO in step S51), the processing advances to step S56. Upon acquiring the observation request information (YES in step S51), the observation request acquirer 11 transmits the observation request information to the observational opportunity specifier 12.

The observational opportunity specifier 12 specifies multiple orbit paths that enable observation of the observation area under designated conditions based on the observation area information, the designated vehicle classification information, the designated observation-sensor classification information, the designated observation-mode classification information, the designated observation period information, and the designated off-nadir-angle range information included in the observation request information received from the observation request acquirer 11, as well as on the vehicle classification information, the (orbital) ephemeris information, the observation-mode classification information, the off-nadir angle information, and the off-nadir-angle range information included in the vehicle information stored in the storage 16 (step S52).

The observational opportunity specifier 12 specifies the observational opportunities for observation of the observation area for each specified orbit path based on the (orbital) ephemeris information, the observation-mode classification information, the observation width information, the off-nadir angle information, the off-nadir-angle range information, and the maximum continuous observation time information included in the vehicle information stored in the storage 16 (step S53). The observational opportunity specifier 12 transmits the observation request information and the observation scene list indicating the observation scenes of all the specified observational opportunities to the observation plan determiner 14.

The observation plan determiner 14 performs the observation plan determining process to determine an observation plan with a high evaluation value based on the observation scene list and the observation request information received from the observational opportunity specifier 12 and the agility performance information included in the vehicle information stored in the storage 16 (step S54). The observation plan determiner 14 transmits the observation plan information indicating the determined observation plan to the observation-plan outputter 15.

The observation-plan outputter 15 outputs the observation plan information received from the observation plan determiner 14 (step S55). When the observation planning device 1 is not turned off (NO in step S56), the processing returns to step S51 and repeats steps S51 to S56. When the observation planning device 1 is turned off (YES in step S56), the processing ends.

The observation planning device 1 according to Embodiment 2 generates a temporary observation plan based on the observation scene list and the vehicle information, including the observation area with a greater size than the observation range, and determines a temporary observation plan with a high evaluation value for evaluating the efficiency as an observation plan to facilitate creation of an efficient observation plan.

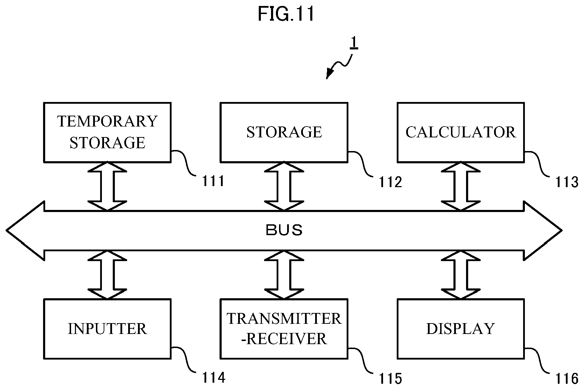

The hardware configuration of the observation planning device 1 is described with reference to FIG. 11. As illustrated in FIG. 11, the observation planning device 1 includes a temporary storage 111, a storage 112, a calculator 113, an inputter 114, a transmitter-receiver 115, and a display 116. The temporary storage 111, the storage 112, the inputter 114, the transmitter-receiver 115, and the display 116 are connected to the calculator 113 with a bus.

The calculator 113 is, for example, a central processing unit (CPU). The calculator 113 performs the processing with the observational opportunity specifier 12, the observation scene extractor 13, and the observation plan determiner 14 in the observation planning device 1 in accordance with a control program stored in the storage 112.

The temporary storage 111 is, for example, a random-access memory (RAM). The control program stored in the storage 112 is loaded into the temporary storage 111. The temporary storage 111 is used as a work area for the calculator 113.

The storage 112 is a nonvolatile memory such as a flash memory, a hard disk, a digital versatile disc RAM (DVD-RAM), or a digital versatile disc rewritable (DVD-RW). The storage 112 preliminarily stores the program for causing the calculator 113 to perform the processing with the observation planning device 1, provides data stored in the program to the calculator 113 in response to an instruction from the calculator 113, and stores data provided from the calculator 113. The storage 16 is included in the storage 112.

The inputter 114 includes inputters, such as a keyboard and a pointing device, and an interface that connects the inputters, such as a keyboard and a pointing device, to the bus. Through the inputter 114, information input by the user is provided to the calculator 113. In the structure in which the user directly inputs the observation request information, the inputter 114 functions as the observation request acquirer 11.

The transmitter-receiver 115 includes a network terminator or a radio communication device connected to a network, and a serial interface or a local area network (LAN) interface connected to the network terminator or the radio communication device. The transmitter-receiver 115 serves as the observation request acquirer 11 in the structure for acquiring the observation request information from an external device or an external system. The transmitter-receiver 115 serves as the observation-plan outputter 15 in the structure for transmitting the observation plan information to a user terminal.

The display 116 is, for example, a cathode ray tube (CRT) or a liquid crystal display (LCD). For example, the display 116 displays an operation screen into which the user inputs information. The display 116 serves as the observation request acquirer 11 in the structure that allows the user to directly input the observation request information. The display 116 serves as the observation-plan outputter 15 in the structure for displaying the observation plan information on a screen.

The processing performed by the observation request acquirer 11, the observational opportunity specifier 12, the observation scene extractor 13, the observation plan determiner 14, the observation-plan outputter 15, and the storage 16 in the observation planning device 1 illustrated in FIG. 2 are implemented by the control program using, for example, the temporary storage 111, the calculator 113, the storage 112, the inputter 114, the transmitter-receiver 115, and the display 116 as resources.

The hardware configuration and the flowcharts are mere examples, and may be changed or modified as appropriate.

The main components that perform the processing of the observation planning device 1, including the temporary storage 111, the calculator 113, the storage 112, the inputter 114, the transmitter-receiver 115, and the display 116, can be implemented with a typical computer system rather than with a dedicated system. For example, a computer program for performing the above operations may be stored in a non-transitory computer-readable recording medium such as a flexible disc, a compact disc read-only memory (CD-ROM), or a DVD-ROM for distribution, and may be installed on a computer to implement the observation planning device 1 that performs the above processing. In some embodiments, the computer program may be stored in a storage device included in a server device on a communication network such as the Internet, and may be downloaded by a common computer system to implement the observation planning device 1.

In the system with the above functions of the observation planning device 1 implementable partially by the operating system (OS) and partially by an application program or through cooperation between the OS and the application program, portions executable by the application program other than the OS may be stored in a non-transitory recording medium or a storage device.

The computer program may be superimposed on a carrier wave to be provided through a communication network. For example, the computer program may be posted on a bulletin board system (BBS) on the communication network to be provided through the communication network. The computer program may be activated and executed under the control of the OS in the same manner as another application program to perform the above processing.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Reference Signs List

- 1: Observation planning device
- 11: Observation request acquirer
- 12: Observational opportunity specifier
- 13: Observation scene extractor
- 14: Observation plan determiner
- 15: Observation-plan outputter
- 16: Storage
- 101: Observation area
- 102: Vertex
- 103: Polygon
- 104: Vehicle
- 105: Orbit path
- 106: Off-nadir angle
- 107: Observation range
- 108: Off-nadir angle range
- 109: Representative point group
- 111: Temporary storage
- 112: Storage
- 113: Calculator
- 114: Inputter
- 115: Transmitter-receiver
- 116: Display

## Claims

1. An observation planning device, comprising:
an observation request acquirer to acquire observation request information for requesting observation of an observation area;
an observational opportunity specifier to specify, based on the observation request information and vehicle information about a vehicle, a plurality of orbit paths of the vehicle enabling observation of the observation area, and to specify observational opportunities of observing the observation area for each of the specified plurality of orbit paths;
an observation plan determiner to generate, based on the vehicle information and an observation scene list indicating a plurality of observation scenes that are observations performed in all the observational opportunities specified by the observational opportunity specifier, temporary observation plans by combining observation scenes of the plurality of observation scenes, and to determine, as an observation plan, a temporary observation plan of the temporary observation plans having a higher evaluation value for efficiency evaluation; and
an observation-plan outputter to output the observation plan determined by the observation plan determiner.

2. The observation planning device according to claim 1, further comprising:
an observation scene extractor to extract an observation scene of the plurality of observation scenes having a higher specific degree of significance from the observation scene list based on the observation scene list and the observation request information, wherein
the observation plan determiner generates the temporary observation plans based on the vehicle information and an extracted observation scene list indicating the observation scene extracted by the observation scene extractor, and determines the temporary observation plan having the higher evaluation value as the observation plan.

3. The observation planning device according to claim 2, wherein the observation scene extractor
converts the observation area to a representative point group,
calculates a degree of significance of each of covered representative points that are representative points to be covered by observation ranges in the plurality of observation scenes based on a total number of times each of the covered representative points is covered, and a degree of significance of each of the covered representative points based on a coverage date and time or a coverage order of the covered representative points,
assigns the degrees of significance to each of the covered representative points, and
determines a highest degree of significance of the degrees of significance of each of the covered representative points in the observation scene as a specific degree of significance of the observation scene.

4. The observation planning device according to any one of claims 1 to 3, wherein
the observation plan determiner calculates the evaluation value based on an unobserved area ratio, a number of times of observation, and a period of time taken for observation of the temporary observation plan.

5. The observation planning device according to any one of claims 1 to 4, wherein
the observation plan determiner models an observation planning problem for combining observation scenes of the plurality of observation scenes as a 0-1 integer programming problem, and solves a linear programming problem resulting from releasing of the 0-1 integer programming problem from an integer constraint to generate the temporary observation plan.

6. The observation planning device according to any one of claims 1 to 5, wherein
the observation plan determiner discards the temporary observation plan and generates a new temporary observation plan when a time interval between the observation scenes included in the temporary observation plan does not satisfy a constraint of agility performance of the vehicle.

7. An observation planning method to be implemented by an observation planning device, the method comprising:
specifying, based on observation request information for requesting observation of an observation area and vehicle information about a vehicle, a plurality of orbit paths of the vehicle enabling observation of the observation area, and specifying observational opportunities of observing the observation area for each of the specified plurality of orbit paths; and
generating, based on the vehicle information and an observation scene list indicating a plurality of observation scenes that are observations performed in all the specified observational opportunities, temporary observation plans by combining observation scenes of the plurality of observation scenes, and determining, as an observation plan, a temporary observation plan of the temporary observation plans having a higher evaluation value for efficiency evaluation.

8. A program for causing a computer to function as:
an observational opportunity specifier to specify, based on observation request information for requesting observation of an observation area and vehicle information about a vehicle, a plurality of orbit paths of the vehicle enabling observation of the observation area, and to specify observational opportunities of observing the observation area for each of the specified plurality of orbit paths; and
an observation plan determiner to generate, based on the vehicle information and an observation scene list indicating a plurality of observation scenes that are observations performed in all the observational opportunities specified by the observational opportunity specifier, temporary observation plans by combining observation scenes of the plurality of observation scenes, and to determine, as an observation plan, a temporary observation plan of the temporary observation plans having a higher evaluation value for efficiency evaluation.
